(19) Europäisches Patentamt
European Patent Office
Office européen des brevets

(11) Veröffentlichungsnummer: **0 028 345**
**B1**

(12) # EUROPÄISCHE PATENTSCHRIFT

(45) Veröffentlichungstag der Patentschrift: **12.10.83**

(51) Int. Cl.³: **C 08 G 79/04**

(21) Anmeldenummer: **80106384.3**

(22) Anmeldetag: **20.10.80**

(54) **Verfahren zur Herstellung von thermoplastischen aromatischen Polyphosphonaten verbesserter thermischer Alterungsbeständigkeit und deren Verwendung.**

(30) Priorität: **31.10.79 DE 2944093**

(43) Veröffentlichungstag der Anmeldung: **13.05.81 Patentblatt 81/19**

(45) Bekanntmachung des Hinweises auf die Patenterteilung: **12.10.83 Patentblatt 83/41**

(84) Benannte Vertragsstaaten: **CH DE FR GB IT LI**

(56) Entgegenhaltungen:

**US-A-2 682 522**
**US-A-3 271 329**

**Le dossier contient des informations techniques présentées postérieurement au dépôt de la demande et ne figurant pas dans le présent fascicule.**

(73) Patentinhaber: **BAYER AG, Zentralbereich Patente, Marken und Lizenzen, D-5090 Leverkusen 1, Bayerwerk (DE)**

(72) Erfinder: **Schmidt, Manfred, Dr., c/o Mobay Chemical Corporation, New Martinsville, VA, 26155 (US)**
Erfinder: **Freitag, Dieter, Dr., Hasenheide 10, D-4150 Krefeld 1 (DE)**
Erfinder: **Bottenbruch, Ludwig, Dr., Wöhlerstrasse 5, D-4150 Krefeld 1 (DE)**

**EP 0 028 345 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von thermoplastischen aromatischen Polyphosphonaten verbesserter thermischer Alterungsbeständigkeit und deren Verwendung

Die Anmeldung betrifft ein Verfahren zur Herstellung von thermoplastischen aromatischen Polyphosphonaten mit verbesserter thermischer Alterungsbeständigkeit und deren Verwendung zur Herstellung von Formkörpern.

Phosphonsäurediarylester und gegebenenfalls Triarylphosphate werden mit aromatischen Dihydroxiverbindungen und gegebenenfalls aromatischen Tri- und/oder Tetrahydroxiverbindungen in einer Schmelzumesterungsreaktion unter Abspaltung von Monohydroxiarylen umgesetzt, wobei als Umesterungs-Katalysatoren neutrale Ester des Titans, des Zirkons, des Vanadiums, Antimon- oder Wismuthsalze, Dialkylzinnoxide, Dialkyl-dialkoxizinnverbindungen, neutrale Ester der Dialkylzinnsäuren, neutrale Ester der Trialkylzinnsäuren oder Gemische aus Germaniumdioxid oder Titandioxid mit einem der vorgenannten Katalysatoren eingesetzt werden. Die nach dem erfindungsgemässen Verfahren hergestellten aromatischen Polyphosphonate zeigen eine wesentlich verbesserte thermische Alterungsbeständigkeit als Polyphosphonate, die nach dem Verfahren der Schmelzumesterung in Gegenwart von sauren oder alkalischen Katalysatoren hergestellt werden.

Es ist bekannt, Polyphosphonate durch Umsetzung von Phosphonsäurediarylestern mit aromatischen Dihydroxiverbindungen in Gegenwart von wasserfreiem Magnesiumchlorid herzustellen (vgl. US-PS 2 682 522).

Die nach diesem Verfahren hergestellten Polymere sind einerseits nicht genügend hochmolekular, um als thermoplastische Chemiewerkstoffe Verwendung finden zu können, andererseits verursachen die nach diesem Verfahren verwendeten und im Polymer verbleibenden Katalysatoren bei der Wärmealterung des Polymers an Luft einen raschen Molekulargewichtsabbau, wie durch Messung der relativen Lösungsviskosität festgestellt werden kann.

Es ist auch schon vorgeschlagen worden, (ältere deutsche Patentanmeldung P 29 25 207.1) thermoplastische aromatische Polyphosphonate durch Umesterung von Phosphonsäurediarylestern mit aromatischen Dihydroxiverbindungen in Gegenwart von bis zu 3 Mol-% verzweigender Monomere wie Triarylphosphate und/oder 3- oder 4-funktionelle aromatische Hydroxiverbindungen herzustellen, wobei als Umesterungskatalysatoren alkalische Verbindungen verwendet werden, die am Ende der Polykondensationsreaktion durch Zugabe äquimolarer Mengen saurer Verbindungen wie beispielsweise Dialkylsulfate oder Säurechloride neutralisiert werden können. Die nach diesem Verfahren erhaltenen thermoplastischen aromatischen Polyphosphonate sind hochflammwidrige Polymere mit guten Chemiewerkstoffeigenschaften, zeigen jedoch bei thermischer Alterung noch einen Abfall der relativen Lösungsviskosität.

Überraschenderweise wurde gefunden, dass man die thermische Alterungsbeständigkeit dieser thermoplastischen aromatischen Polyphosphonate wesentlich verbessern kann, wenn man anstelle der alkalischen oder sauren Umesterungskatalysatoren $10^{-4}$ bis $2.10^{-2}$ Gew.-%, bezogen auf 100 Gew.-% eingesetzter aromatischer Dihydroxiverbindungen, an speziellen, neutralen Umesterungskatalysatoren verwendet, wodurch der technische Anwendungsumfang der Polyphosphonate bedeutend erweitert wird.

Gegenstand der Erfindung ist somit ein Verfahren zur Herstellung von linearen oder verzweigten thermoplastischen aromatischen Polyphosphonaten mit mittleren Molekulargewichten (Zahlenmittel $\overline{M}_n$) von 11 000 bis 200 000 durch Umesterung von mindestens einem Diarylphosphonat und gegebenenfalls mindestes einem Triarylphosphat mit mindestens einer aromatischen Dihydroxiverbindung und gegebenenfalls mindestens einer aromatischen Tri- und/oder Tetrahydroxiverbindung in der Schmelze in sauerstofffreier Gasatmosphäre bei Atmospärendruck oder vermindertem Druck in Gegenwart katalytischer Mengen eines Umesterungskatalysators unter Abdestillieren der flüchtigen Bestandteile, dadurch gekennzeichnet, dass als Umesterungskatalysator mindestens einer aus der Gruppe der

$C_1$-$C_{18}$ Tetraalkyltitanate,
$C_3$-$C_{18}$ Tetraalkylzirkonate,
$C_2$-$C_{18}$ Trialkylvanadylate,
$C_2$-$C_4$ Dialkylzinnoxide,
$C_2$-$C_4$- Dialkyl-$C_1$-$C_4$-dialkylzinnverbindungen

einer aus der Gruppe der Antimon- oder Wismuthsalze, einer aus der Gruppe der $C_2$-$C_4$-Dialkylzinnsäureester, einer aus der Gruppe der $C_2$-$C_4$-Trialkylzinnsäureester oder mindestens einer der Katalysatoren aus den vorstehend genannten Gruppen im Gemisch mit Germaniumdioxid oder Titandioxid eingesetzt wird.

Erfindungsgemäss geeignete neutrale Umesterungskatalysatoren sind:

a) $C_1$-$C_{18}$-Tetraalkyltitanate wie beispielsweise Titan-tetraethylat,
Titan-tetrapropylat,
Titan-tetraisopropylat,
Titan-tetrabutylat,
Titan-tetraoctonat,
Titan-tetrastearat,

b) Dialkylzinnoxide wie beispielsweise
Di-iopropylzinnoxid,
Dibutylzinnoxid,

c) Dialkyl-dialkoxi-zinnverbindungen wie beispielsweise
Diisopropyl-dimethoxi-zinn,
Dibutyl-diisopropoxi-zinn,
Dibutyl-dimethoxi-zinn,

d) $C_3$-$C_{18}$-Tetraalkylzirkonate wie beispielsweise
Zirkon-tetraacetylacetonat,
Zirkontetrabutylat,
Zirkontetraoctonat,
Zirkontetra-stearat,

e) $C_2$-$C_{18}$-Trialkylvanadylate wie beispielsweise
Vanadyl-ethylat, VO $(OC_2H_5)_3$,
Vanadyl-isopropylat, $VO(O\text{-}i\text{-}C_3H_7)_3$,
Vanadyl-n-butylat, $VO(O\text{-}n\text{-}C_4H_9)_3$ sowie

f) Antimonsalze wie beispielsweise
Antimonacetat,
Antimonphosphat,
Antimonoxalat,

g) Wismuthsalze wie beispielsweise
Wismuthstannat,
Wismuthacetat,
Wismuthbenzoat,
Wismuthoxalat,
Wismuthtinanat,
Wismuth-tribromphenolat,

h) $C_2$-$C_4$-Dialkylzinnsäureester wie beispielsweise
Dibutylzinn-tartrat,
Dibutylzinn-di-(o-phenyl)-phenolat,

i) $C_2$-$C_4$-Trialkylzinnsäureester wie beispielsweise
Tributylzinnacetat,
Tributylzinnbenzoat,

j) Gemische aus Germaniumdioxid oder Titandioxid mit mindestens einem der o.g. Katalysatoren a) bis i).

Die nach dem erfindungsgemässen Verfahren hergestellten thermoplastischen aromatischen, gegebenenfalls verzweigten Polyphosphonate mit mittleren Molekulargewichten (Zahlenmittel $\overline{M}_n$) von 11 000 bis 200 000 können aus wiederkehrenden Einheiten der Strukturen

A) 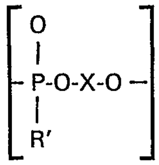 und gegebenenfalls

B) 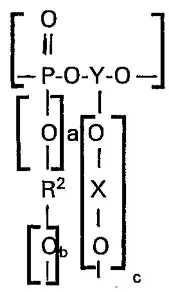

sowie

C) den in den Strukturen A) und B) an Phosphor gebundenen Endgliedern

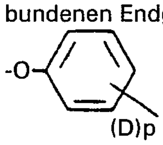 ; -OH; -O-X-OH und an den

Sauerstoff gebundenen Endgliedern

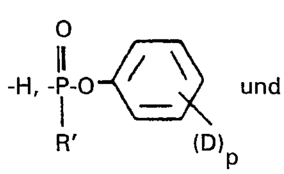 und 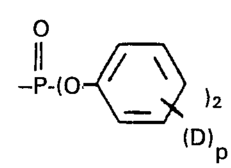

bestehen.

Die Symbole X, D, p und R' sind nachstehend erläutert, wobei der Anteil B), bezogen auf Summe aus A) und B), 0 bis 3 Mol-% betragen kann und wobei in den Strukturen A) und B) bedeuten:

$R^1$ = mindestens einen der Reste:
$C_1$-$C_{12}$ Alkyl,
$C_2$-$C_{12}$ Alkenyl,
$C_6$-$C_{30}$ Cycloalkyl Cycloalkenyl, Aryl, Arylalkyl oder Arylalkenyl, wobei die jeweilige Arylgruppe nicht substituiert oder durch 1-5 $C_1$-$C_4$-Alkylgruppen oder durch 1-5 Halogenatome (F, Cl oder Br) oder durch die genannten Alkylgruppen und Halogenatome substituiert ist,

X = mindestens einen der Reste:

Phenylen 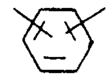

Biphenylylen 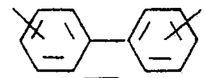

$C_1$-$C_4$-Alkylenbisphenylen 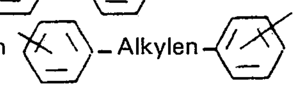

$C_5$-$C_{12}$-Cycloalkylenbisphenylen

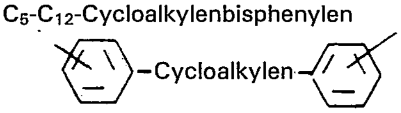

Thiobisphenylen 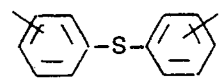

Oxibisphenylen 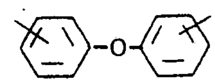

Sulfonylbisphenylen 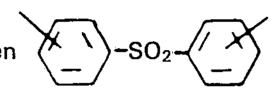

Carbonylbisphenylen 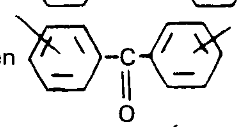

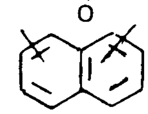

Naphthylen

wobei jeder Phenylkern unsubstituiert oder durch 1-4 $C_1$-$C_4$-Alkylgruppen oder durch 1-4 Halogenatome (F, Cl oder Br) oder durch die genannten Alkylgruppen und Halogenatome und der Naphthylenkern unsubstituiert oder durch 1-6 mindestens einer der genannten Gruppen oder Atome substituiert ist;

Y = einen drei- oder vierwertigen Rest eines um die phenolischen Hydroxylgruppen verminderten trifunktionellen Einkern- oder tri- oder tetrafunktionellen Mehrkernphenols, wobei im Falle des Mehrkernphenols die ein oder zwei phenolische Hydroxigruppen tragenden aromatischen Kerne durch aliphatische $C_1$-$C_7$Kohlenwasserstoffrest oder durch mindestens einen Benzolrest verbunden sind;

Y = X, wenn c = 0, a = 1, b = 1 und gleichzeitig $R^2$ = Y' (-O-X-O)$_c$, bzw. $R^2$ = X ist, wobei Y' = Y und c' und 1 oder 2 sind

a = 0 oder die Zahl 1;

b = 0 oder die Zahl 1;

c = 0 oder eine der Zahlen 1 oder 2, vorzugsweise c = 1 oder 2;

$R^2$ = $R^1$, wenn a und b jeweils 0 sind, in diesem Falle muss Y einen drei- oder vierwertigen Rest, wie oben definiert, darstellen;

$R^2$ = 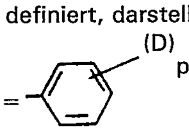 , wenn a = 1 oder b = 0 sind,

in diesem Fall muss Y einen drei- oder vierwertigen Rest, wie oben definiert, darstellen;

$R^2$ = X oder Y' (O-X-O)$_{c'}$, wenn a und b jeweils 1 sind;

D = gleich oder verschieden und eine $C_1$-$C_4$-Alkylgruppe oder Halogen (F, Cl oder Br) und p = 0 oder eine Zahl von 1 bis 5, vorzugsweise p = 0, darstellt.

Vorzugsweise haben vorstehende Definitionen folgende Bedeutung:

$R^1$ = mindestens einen der Reste Methyl oder Phenyl, insbesondere Methyl;

X = mindestens einen der Reste Phenylen, Biphenylylen, $C_1$-$C_4$-Alkylenbisphenylen, wobei jeder Phenylkern durch 1 bis 4 Methylgruppen substituiert sein kann, Cyclohexylenbisphenylen, Oxibisphenylen, Thiobisphenylen, Sulfonylbisphenylen, insbesondere $C_1$-$C_4$-Alkylenbisphenylen, wobei jeder Phenylkern durch ein oder zwei Methylgruppen substituiert sein kann;

Y = einen drei- oder vierwertigen Rest eines um die phenolischen Hydroxylgruppen verminderten trifunktionellen Einkern- oder tri- oder tetrafunktionellen Mehrkernphenols, wobei im Falle des Mehrkernphenols die ein oder zwei phenolischen Hydroxylgruppen tragenden aromatischen Kerne durch aliphatische $C_1$-$C_7$-Kohlenwasserstoffreste oder durch mindestens einen Benzolrest verbunden sein können;

a = 0 oder die Zahl 1;

b = 0 oder die Zahl 1;

c = eine der Zahlen 1 oder 2;

$R^2$ = $R^1$, wenn a und b jeweils 0 sind;

$R^2$ = 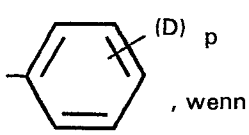 , wenn a = 1 und b = 0 sind;

$R^2$ = X oder Y' (O-X-O)$_{c'}$, wenn a und b jeweils 1 sind;

D = gleich oder verschieden und eine $C_1$-$C_4$-Alkylgruppe und p = 0 oder eine Zahl von 1 bis 5, insbesondere p = 0.

Vorzugsweise besitzen die nach dem erfindungsgemässen Verfahren hergestellten thermoplastischen aromatischen Polyphosphonate mittlere Molekulargewichte (Zahlenmittel $\overline{M_n}$) von 13 000 bis 80 000, insbesondere 13 000 bis 40 000. Die Bestimmung der Molekulargewichte erfolgt nach der Methode der Membranosmose mit Hilfe von Membranen, die für Teilchen mit einem Molekulargewicht von bis zu 3000 undurchlässig sind.

Gemäss dem beanspruchten Verfahren können 97 bis 100 Mol mindestens eines Diarylphosphonats mit 90 bis 99 Mol mindestens einer aromatischen Dihydroxiverbindung in der Schmelze bei 90° bis 340°C in sauerstofffreier Gasatmosphäre bei Atmosphärendruck oder vermindertem Druck sowie in Gegenwart von $10^{-4}$ bis $2.10^{-2}$ Gew.-%, bezogen auf 100 Gew.-% eingesetzter aromatischer Dihydroxiverbindung, mindestens eines der erfindungsgemäss einzusetzenden neutralen Katalysatoren unter Abdestillieren der flüchtigen Bestandteile umgesetzt werden.

Vorzugsweise werden für die Umesterung Phosphonsäurediarylester der Formel I verwendet

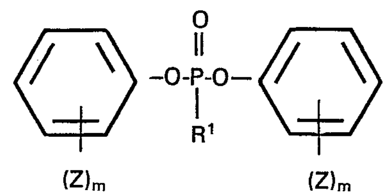

worin

$R^1$ = mindestens einen der Reste:

$C_1$-$C_{12}$ Alkyl,

$C_2$-$C_{12}$ Alkenyl,

$C_6$-$C_{30}$ Cycloalkyl, Cycloalkenyl, Aryl, Arylalkyl oder Arylalkenyl bedeutet und wobei die jeweilige Arylgruppe nicht substituiert oder durch 1-5 $C_1$-$C_4$-Alkylgruppen oder durch 1-5 Halogenatome (F, Cl oder Br) oder durch die genannten Alkylgruppen und Halogenatome substituiert ist und ferner

Z = F, Cl, Br oder $C_1$-$C_4$-Alkyl bedeutet und mehrere Z in einem Arylrest gleich oder verschieden sind und

m = 0 oder eine ganze Zahl von 1 bis 5 ist.

Insbesondere werden Methyl- oder Phenylphosphonsäurediphenylester eingesetzt.

Bevorzugte aromatische Dihydroxiverbindungen entsprechen den Formeln II und III

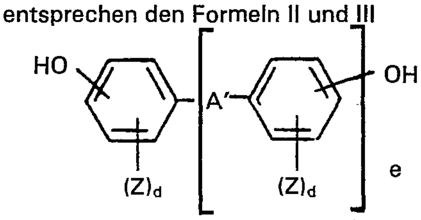

II

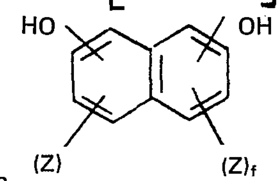

III

in denen

A' eine Einfachbindung, eine Alkylgruppe mit 1 bis 4 C-Atomen, eine Cycloalkylengruppe mit 5 oder 6 C-Atomen, eine Sulfonylgruppe, eine Carbonylgruppe, Sauerstoff oder Schwefel,

e die Zahl 0 oder 1,

Z F, Cl, Br oder $C_1$-$C_4$-Alkyl bedeutet und mehrere Z in einem Arylrest gleich oder verschieden sind,

d die ganzen Zahlen 0 oder 1 bis 4,

f die ganzen Zahlen 0 oder 1 bis 3 bedeuten.

Besonders bevorzugt sind Verbindungen der Formel II, in der e = 1 und A' eine Einfachbindung, den 2,2-Propylenrest oder Schwefel sowie d = 0 bedeuten, insbesondere jedoch 2,2-Bis(4-hydroxiphenyl)-propan und 4,4'-Dihydroxidiphenyl.

Als verzweigende Monomere können gegebenenfalls 0,01 bis 3 Mol-%, bezogen auf eingesetzte Diarylphosphonate, eines Triarylphosphonats der Formel IV verwendet werden,

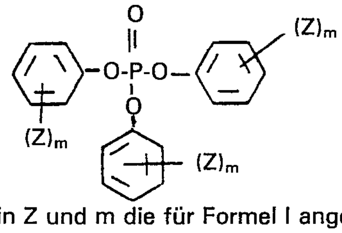

IV

worin Z und m die für Formel I angegebene Bedeutung haben. Besonders bevorzugt ist Triphenylphosphat.

Als verzweigende Monomere können gegebenenfalls auch 0,01 bis 3 Mol-%, bezogen auf eingesetzte Dihydroxiverbindungen, an aromatischen Tri- oder Tetrahydroxiverbindungen verwendet werden, wobei die Summe aus verzweigenden Triarylphosphaten der Formel IV und verzweigenden aromatischen Tri- oder Tetrahydroxiverbindungen maximal 3 Mol-% beträgt.

Bevorzugte Tri- und Tetrahydroxiverbindungen sind:
Phloroglucin; 4,6-Dimethyl-2,4,6-tri-(4-hydroxiphenyl)-hepten-2; 4,6-Dimethyl-2,4,6-tri-(4-hydroxiphenyl)-heptan; 1,3,5-Tri-(4-hydroxiphenyl)-benzol; 1,1,1-Tri-(4-hydroxiphenyl)-ethan; Tri-(4-hydroxiphenyl)-phenylmethan; 2,2-Bis-[4,4-bis-(4-hydroxiphenyl)-cyclohexyl]-propan; 2,4-Bis-(4-hydroxiphenyl)-isopropylphenol; 2,6-Bis-(2'-hydroxi-5'-methyl-benzyl)-4-methylphenol; 2-(4-Hydroxiphenyl)-2-(2,4-dihydroxiphenyl)-propan; Tetra-(4-hydroxiphenyl)-methan; Tetra-[4-(4-hydroxiphenylisopropyl)-phenoxi]-methan und 1,4-Bis-(4,4''-dihydroxitriphenyl-methyl)-benzol oder deren Mischungen.

Alle für die Umesterung eingesetzten Ausgangsmaterialien sollen Reinheitsgrade von > 99,1%, vorzugsweise > 99,7%, besitzen.

Zur Durchführung des erfindungsgemässen Verfahrens werden die Phosphonsäurediarylester und gegebenenfalls Triarylphosphate mit den aromatischen Dihydroxiverbindungen und gegebenenfalls Tri- oder Tetrahydroxiverbindungen in sauerstofffreier Atmosphäre, d.h. in Gegenwart eines Inertgases wie beispielsweise Stickstoff oder Kohlendioxid und in Gegenwart der genannten neutralen Katalysatoren bei Temperaturen zwischen 90° und 340°C, insbesondere zwischen 150° und 320°C, zur Reaktion gebracht. Unter Abdestillierung der flüchtigen aromatischen Monohydroxiaryle bei erhöhter Temperatur, vorzugsweise im Vakuum, wird die Reaktion unter Einleiten von Inertgas so lange weitergeführt, bis der gewünschte Kondensationsgrad erreicht ist.

Nach Beendigung der Polykondensation wird die gebildete Schmelze des Polyphosphonats in üblicher Weise in Granulate oder direkt in geformte Gebilde wie Filme, Fasern oder Borsten übergeführt. Die so erhaltenen Polyphosphonate lassen sich im Schmelzfluss durch technisch gebräuchliche Verarbeitungsaggregate wie Extruder und Spritzgussmaschinen zu Gebilden extremer Flammwidrigkeit und hoher Wärmeformbeständigkeit verarbeiten.

Die nach dem erfindungsgemässen Verfahren hergestellten Polyphosphonate besitzen ausgezeichnete mechanische Eigenschaften wie beispielsweise eine hohe Zähigkeit und Zugfestigkeit sowie eine wesentlich verbesserte thermische Alterungsbeständigkeit.

So zeigt beispielsweise ein nach dem beanspruchten Verfahren hergestelltes Polyphosphonat auf Basis von Methylphosphonsäurediphenylester und 4,4'-Dihydroxidiphenyl, das eine relative Lösungsviskosität von $\eta$ rel = 1,316 besitzt (gemessen bei 25°C und einer Konzentration von 0,5 Gew.-% in Methylenchlorid), nach 7tägiger Alterung bei 100°C an Luft keine Verminderung der rel. Lösungsviskosität. Ein gemäss Vergleichsbeispiel 1 vorliegender Patentanmeldung hergestelltes aromatisches Polyphosphonat aus denselben Monomeren mit einer rel. Lösungsviskosität von $\eta$ rel = 1,321 zeigt nach 7tägiger Alterung bei 100°C an Luft einen Abfall der rel. Lösungsviskosität auf $\eta$ rel = 1,267.

Ein nach dem Schmelzumesterungsverfahren gemäss der US-PS 2 682 522 unter Verwendung von wasserfreiem Magnesiumchlorid als Umesterungskatalysator hergestelltes Polyphosphonat auf Basis von Methylphosphonsäurediphenylester und 4,4'-Dihydroxidiphenyl, das eine relative Lösungsviskosität von 1,144 besitzt, zeigt bereits nach 2tägiger Alterung bei 100°C an Luft einen Abfall der relativen Lösungsviskosität auf 1,082 (siehe Vergleichsbeispiel 2).

Die relativen Viskositäten der nach dem erfindungsgemässen Verfahren hergestellten thermoplastischen, aromatischen Polyphosphonate, ermittelt bei 25°C und einer Konzentration von 0,5 Gew.-% in Methylenchlorid, betragen 1,20 bis über 2,0, vorzugsweise 1,24 bis 1,40.

Die nach dem erfindungsgemässen Verfahren hergestellten Polyphosphonate sind löslich in Methylenchlorid; 1,1,2,2-Tetrachlorethan, Trichlorethylen; Chloroform; Chlorbenzol; 1,2-Dichlorbenzol; Dioxan und Hexamethylphosphorsäuretriamid (HMPT).

Den Polyphosphonaten können antistatische Mittel, Pigmente, Formtrennmittel, thermische Stabilisatoren, Ultraviolettlichtstabilisatoren, Füllstoffe wie beispielsweise Talkum, Mineralwolle, Glimmer, Calciumcarbonat, Dolomit und weitere, sowie verstärkende Füllstoffe wie beispielsweise Glasfasern, Glaskugeln und Asbest zugemischt werden.

Die erfindungsgemässen thermoplastischen, aromatischen, vorzugsweise halogenfreien Polyphosphonate können überall dort Anwendung finden, wo thermoplastische Chemiewerkstoffe höchster Brandwidrigkeit benötigt werden, und wo zusätzlich bei Einwirkung sehr hoher Temperaturen eine Entwicklung toxischer Pyrolysegase vermieden werden soll. Derartige Anwendungsgebiete sind beispielsweise im Fahrzeugbau, im Flugzeugbau, auf dem Raumfahrtsektor oder auf dem Gebiet der Sicherheitstechnik zu finden.

Die nach dem oben beschriebenen erfindungsgemässen Verfahren erhaltenen thermoplastischen, aromatischen Polyphosphonate wurden bei 240° bis 320°C extrudiert und zu Prüfkörpern ausgeformt.

Die Prüfung des Verhaltens bei Schlagbeanspruchung erfolgte sowohl durch Messung der Schlagzähigkeit nach Charpy $a_n$ gemäss DIN 53 453 und ASTM D 256 als auch durch Messung der Kerbschlagzähigkeit nach Charpy $a_k$ gemäss DIN 53 453 oder ASTM D 256. Die Messung der Härte erfolgte durch Messung der Kugeldruckhärte HK gemäss DIN 53 456. Die Prüfung der mechanisch-elastischen Eigenschaften erfolgte durch Spannungs-Verformungsversuche wie durch Messung des Biege-E-Moduls gemäss DIN 53 457, durch Messung der Reissfestigkeit $\delta_R$, der Reissdehnung $\epsilon_R$, der Streckfestigkeit $\delta_S$ und der Streckdehung $\epsilon_S$ gemäss DIN 53 455 (1968) oder ASTM D 638.

Die Prüfung der Wärmeformbeständigkeit erfolgte durch Messung des Vicat-Erweichungspunktes VSP

gemäss DIN 53 460 oder ISO/R 75. Die Einfriertemperaturen $T_E$ wurden durch Differentialthermoanalyse (DTA) bestimmt.

Die Prüfung des Brandverhaltens erfolgte sowohl durch Messung des $O_2$-Index gemäss ASTM D 2863-70 als auch durch Messung der Nachbrennzeit gemäss dem UL-Test (Subj. 94).

Hierbei werden im Spritzgussverfahren bei 300 bis 310°C Teststäbe mit den Abmessungen:

127 × 12,7 × 1,6 mm (1/16") und
127 × 12,7 × 3,2 mm (1/8") ausgeformt.

Die Teststäbe wurden dem Testverfahren gemäss Underwriters Laboratories, Inc. Bulletin 94, Verbrennungstest zur Klassifizierung von Materialien, unterworfen.

Gemäss diesem Testverfahren wurden die so geprüften Materialien entweder mit UL-94 V-0, UL-94 V-I und UL-94 V-II klassifiziert, und zwar auf der Basis der mit den 10 Proben erhaltenen Ergebnisse. Die Kriterien für jede dieser V-Klassifizierungen gemäss UL-94 sind kurz wie folgt:

UL-94 V-0
Das durchschnittliche Flammen und/oder Glühen nach Entfernung der Zündflamme soll 5 Sekunden nicht überschreiten und keine der Proben soll Teilchen abtropfen, die absorbierende Baumwolle entzünden.

UL-94 V-I
Das durchschnittliche Flammen und/oder Glühen nach Entfernung der Zündflamme soll 25 Sekunden nicht überschreiten und keine der Proben soll Teilchen abtropfen, die absorbierende Baumwolle entzünden.

UL-94 V-II
Das durchschnittliche Flammen und/oder Glühen nach Entfernung der Zündflamme soll 25 Sekunden nicht überschreiten und die Proben tropfen flammende Teilchen ab, welche absorbierende Baumwolle entzünden.

Weiterhin wurde ein Teststab, der mehr als 25 Sekunden nach Entfernung der Zündflamme brannte, nicht nach UL-94 klassifiziert, sondern nach den Standardbedingungen der vorliegenden Erfindung als «brennt» bezeichnet. Die Vorschrift UL-94 erfordert weiterhin, dass alle Teststäbe eines Versuchs die jeweilige V-Bewertung erfüllen müssen, andernfalls erhalten die 10 Teststäbe die Bewertung des schlechtesten Einzelstabes. Wenn beispielsweise 1 Stab mit UL-94 V-II bewertet wird, dann erhalten alle 10 Stäbe die Bewertung UL-94 V-II.

*Beispiel 1*

6204 g (25,02 Mol) Methylphosphonsäurediphenylester,
4424 g (23,78 Mol) 4,4'-Dihydroxidiphenyl,
7,6 g (1,21 . $10^{-2}$ Mol) 1,4-Bis-(4,4''-dihydroxitriphenylmethyl)-benzol und
0,1 g Titantetrabutylat (als 1 gew.%ige Lölung in Chlorbenzol)

werden unter Stickstoff bei 250°C intensiv in einem Autoklaven vermischt. Innerhalb von 3 Stunden wird unter einem von 250 auf 100 mbar absinkendem Vakuum und bei einer von 250° auf 265°C ansteigenden Temperatur Phenol über eine auf 100°C beheizte Kolonne abdestilliert. Anschliessend wird die Umesterung 5 Stunden unter einem allmählich auf 0,3 mbar absinkenden Druck und einer auf 310°C ansteigenden Innentemperatur fortgesetzt, wobei die Viskosität der Schmelze ansteigt. Man belüftet den Autoklav mit Stickstoff, lässt das Polymer bei 300°C und bei stillstehendem Rührer 1 Stunde absitzen und isoliert das Produkt durch Abspinnen unter Druck (ca. 10 atm) und Granulieren des Schmelzstranges. Man erhält 5,2 kg eines hochmolekularen amorphen Polyphosphonats mit einem Zahlenmittel-Molekulargewicht $\overline{M}_n$ = 26 700 und einer relativen Lösungsviskosität $\eta$ rel = 1,316 (gemessen bei 25°C in Methylenchlorid in 0,5 gew.%iger Lösung). Die Abhängigkeit der relativen Lösungsviskosität von der thermischen Alterung ist in Tabelle 1 angegeben.

*Vergleichsbeispiel 1*

(Vergleich gegenüber Beispiel 1 der älteren deutschen Patentanmeldung P 29 25 207.1)

6204 g (25,02 Mol) Methylphosphonsäurediphenylester,
4424 g (23,78 Mol) 4,4'-Dihydroxidiphenyl,
7,6 g (1,21 . $10^{-2}$ Mol) 1,4-Bis-(4,4''-dihydroxitriphenylmethyl)-benzol und
0.2 g (1,72 . $10^{-3}$ Mol) Natriumphenolat

werden analog der in Beispiel 1 genannten Verfahrensweise umgesetzt. Man erhält 5,2 g eines hochmolekularen amorphen Polyphosphonats mit einem Zahlenmittel-Molekulargewicht $\overline{M}_n$ = 27 600 und einer relativen Lösungsviskosität $\eta$ rel = 1,321 (gemessen bei 25°C in Methylenchlorid in 0,5 gew.%iger Lösung).

Tabelle 1 gibt die Abhängigkeit der relativen Lösungsviskosität von der thermischen Alterung wieder.

*Vergleichsbeispiel 2*

(Vergleichsbeispiel, gemäss der Verfahrensweise aus Beispiel 2 der US-PS 2 682 522)

37,2 g (0,2 Mol) 4,4'-Dihydroxidiphenyl,
54,56 g (0,22 Mol) Methylphosphonsäurediphenylester und
0,2 g wasserfreies Magnesiumchlorid

werden 2 Stunden bei 150°C unter Stickstoffatmosphäre verrührt. Anschliessend wird innerhalb von 3 Stunden die Temperatur auf 250°C erhöht, innerhalb von 1 Stunde der Druck im Reaktionsgefäss auf 20 mbar abgesenkt und dann 3 Stunden bei 250°C bei 1-2 mbar destilliert. Man erhält 45 g eines spröden Polyphosphonats mit einem Zahlenmittel-Molekulargewicht $\overline{M}_n$ = 10 200 und einer relativen Lösungsviskosität $\eta$ rel = 1,144 (gemessen bei 25°C in Methylenchlorid in 0,5 gew.%iger Lösung). Zur Abhängigkeit der relativen Lösungsviskosität von der thermischen Alterung siehe Tabelle 1.

Die Brandwidrigkeitswerte sowie die mechanischen Prüfwerte der Polyphosphonate gemäss Beispiel 1 und Vergleichsbeispiel 1 sind identisch und der Tabelle 2 zu entnehmen.

Aus den Polyphosphonaten des Beispiels 1 und der

Vergleichsbeispiele 1 und 2 wurden aus Methylenchloridlösung Folien mit einer Schichtdicke von 50 $\mu m$ hergestellt und bei 100°C an Luft getempert.

Die aus Polyphosphonat des Vergleichsbeispiels 2 hergestellte Folie war aufgrund des niedrigen Molekulargewichts von Anfang an spröde.

Nach festen Zeitabständen wurden Proben der Folien entnommen und deren relative Lösungsviskosität in einer 0,5 gew.%igen Lösung in Methylenchlorid bei 25°C bestimmt. Die gemessenen Werte sind der folgenden Tabelle vergleichend zu entnehmen:

*Tabelle 1*

| Zeitdifferenz | | Polymer aus | |
|---|---|---|---|
| | Beispiel 1 $\eta$ rel | Vergleichs-beispiel 1 $\eta$ rel | Vergleichs-beispiel 2 $\eta$ rel |
| 0 | 1,316 | 1,321 | 1,144 |
| 2 Tage | 1,317 | 1,306 | 1,082 |
| 4 Tage | 1,316 | 1,290 | — |
| 5 Tage | 1,315 | 1,282 | — |
| 7 Tage | 1,316 | 1,267 | — |

*Tabelle 2*

*Brandwidrigkeitswerte* und *mechanische Prüfwerte* des Polyphosphonats des Beispiels 1 und Vergleichsbeispiels 1

| Prüfung | Prüfnorm | Prüfwert |
|---|---|---|
| $O_2$-Index | ASTM-D 2863-70 | 75% |
| UL-Test (Subj. 94) | | VO (1/16") Nachbrenn-zeit: 0 sec. |
| Vicat B | DIN 53460 | 130°C |
| Schlagzähigkeit $a_n$ | DIN 53453 | ungebrochen |
| Kerbschlagzähigkeit $a_k$ | DIN 53453 | 32 |
| Kugeldruckhärte HK | DIN 53456 | 102 MPa |
| Biege-E-Modul | DIN 53457 | 2610 MPa |
| Biegefestigkeit | DIN 53457 | 59 MPa |
| Zug-E-Modul | DIN 53457 | 2420 MPa |
| Streckfestigkeit $\delta_S$ | DIN 53455 (1968) | 56 MPa |
| Streckdehnung $\epsilon_S$ | DIN 53455 | 8% |
| Reissfestigkeit $\delta_R$ | DIN 53455 | 44 MPa |
| Reissdehnung $\epsilon_R$ | DIN 53455 | 21% |

*Beispiel 2*

Beispiel 1 wurde wiederholt, jedoch wurde anstelle des Titantetrabutylats eine gleiche Menge an Zirkon-n-butylat; $Zr(OC_4H_9)_4$; verwendet. Das erhaltene Polyphosphonat besass eine relative Lösungsviskosität von $\eta$ rel = 1,320; $\overline{M}_n$ = 26 900.

*Beispiel 3*

Beispiel 1 wurde wiederholt, jedoch wurde anstelle des Titantetrabutylats eine gleiche Menge an Vanadyl-isopropylat; $O = V\left(OCH{<}^{CH_3}_{CH_3}\right)_3$; verwendet.

Das erhaltene Polyphosphonat besass eine relative Lösungsviskosität von $\eta$ rel = 1,309; $M_n$ = 25 900.

*Beispiel 4*

Beispiel 1 wurde wiederholt, jedoch wurde anstelle des Titantetrabutylats eine gleiche Menge an Dibutylzinnoxid verwendet. Das erhaltene Polyphosphonat besass eine relative Lösungsviskosität von $\eta$ rel = 1,307; $\overline{M}_n$ = 25 600.

*Beispiel 5*

Beispiel 1 wurde wiederholt, jedoch wurde anstelle des Titantetrabutylats eine gleiche Menge an Dibutyldimethoxizinn verwendet. Das erhaltene Polyphosphonat besass eine relative Lösungsviskosität von $\eta$ rel = 1,321; $M_n$ = 27 000.

*Beispiel 6*

Analog Beispiel 1, jedoch wurde anstelle des Titantetrabutylats eine gleiche Menge Antimonacetat verwendet. Das erhaltene Polyphosphonat besass eine relative Lösungsviskosität von $\eta$ rel = 1,319; $\overline{M}_n$ = 26 800.

*Beispiel 7*

Analog Beispiel 1, jedoch wurde anstelle des Titantetrabutylats eine gleiche Menge Wismuthbenzoat verwendet. Das erhaltene Polyphosphonat besass eine relative Lösungsviskosität von $\eta$ rel = 1,323; $\overline{M}_n$ 27 200.

*Beispiel 8*

Analog Beispiel 1, jedoch wurde anstelle des Titantetrabutylats eine gleiche Menge Dibutylzinntartrat verwendet. Das erhaltene Polyphosphonat besass eine relative Lösungsviskosität von $\eta$ rel = 1,318; $\overline{M}_n$ = 26 000.

*Beispiel 9*

Analog Beispiel 1, jedoch wurde anstelle des Titantetrabutylats eine gleiche Menge Tributylzinnacetat verwendet. Das erhaltene Polyphosphonat besass eine relative Lösungsviskosität von $\eta$ rel = 1,324; $\overline{M}_n$ = 27 300.

*Beispiel 10*

Beispiel 1 wurde wiederholt, jedoch wurde anstelle des Titantetrabutylats eine gleiche Menge eines Gemisches aus Germaniumdioxid und Titantetrabutylat im Gewichtsverhältnis 1 : 1 verwendet. Das erhaltene Polyphosphonat besass eine relative Lösungsviskosität von $\eta$ rel = 1,315; $\overline{M}_n$ = 26 200.

Die gemäss den Beispielen 4 bis 12 erhaltenen Polyphosphonate waren eigenschaftsmässig, insbesondere bezüglich der thermischen Alterungsbeständigkeit, identisch mit dem gemäss Beispiel 1 erhaltenen Polyphosphonat.

*Beispiel 11*

| | | |
|---|---|---|
| 1548,8 | g | (6,245 Mol) Methylphosphonsäurediphenylester, |
| 1354,0 | g | (5,94 Mol) 2,2-Bis-(4-hydroxiphenyl)-prophan (= Bisphenol A) |
| 18,8 | g | ($3.10^{-2}$ Mol) 1,4-Bis-(4,4''-dihydroxitriphenylmethyl)-benzol |
| 0,07 | g | Titantetrabutylat (als 1 gew.%ige Lösung in Chlorbenzol) |

werden analog der in Beispiel 1 geschilderten Verfahrensweise umgesetzt. Man erhält 1,53 kg eines aromatischen amorphen Polyphosphonats mit einer relativen Lösungsviskosität von $\eta$ rel = 1,280; $\overline{M}_n$ = 22 000. P = 10,7 Gew.-%; Glastemperatur $T_G$ = 90°C (nach Differentialthermoanalyse).

Eine 50 $\mu$m Folie des Polyphosphonats gemäss Beispiel 11 zeigte nach 7tägiger Alterung bei 100°C Luft keine Verminderung der relativen Lösungsviskosität.

**Patentansprüche**

1. Verfahren zur Herstellung von linearen oder verzweigten thermoplastischen, aromatischen Polyphosphonaten mit mittleren Molekulargewichten (Zahlenmittel $\overline{M}_n$) von 11 000 bis 200 000 durch Umesterung von mindestens einem Diarylphosphonat und gegebenenfalls mindestens einem Triarylphosphat mit mindestens einer aromatischen Dihydroxiverbindung und gegebenenfalls mindestens einer aromatischen Tri- und/oder Tetrahydroxiverbindung in der Schmelze in sauerstofffreier Gasatmosphäre bei Atmosphärendruck oder vermindertem Druck in Gegenwart katalytischer Mengen eines Umesterungskatalysators unter Abdestillieren der flüchtigen Bestandteile, dadurch gekennzeichnet, dass als Umesterungskatalysator mindestens einer aus der Gruppe der

$C_1$-$C_{18}$ Tetraalkyltitanate,
$C_3$-$C_{18}$ Tetraalkylzirkonate,
$C_2$-$C_{18}$ Trialkylvanadylate,
$C_2$-$C_4$ Dialkylzinnoxide,
$C_2$-$C_4$- Dialkyl-$C_1$-$C_4$-dialkoxizinnverbindungen,

einer aus der Gruppe der Antimon- oder Wismuthsalze einer aus der Gruppe der $C_2$-$C_4$-Dialkylzinnsäureester, einer aus der Gruppe der $C_2$-$C_4$-Trialkylzinnsäureester oder mindestens einer der Katalysatoren aus den vorstehend genannten Gruppen im Gemisch mit Germaniumdioxid oder Titandioxid eingesetzt wird.

2. Verfahren zur Herstellung von linearen oder verzweigten thermoplastischen, aromatischen Polyphosphonaten gemäss Anspruch 1, dadurch gekennzeichnet, dass $10^{-4}$ bis 2 . $10^{-2}$ Gew.-%, bezogen auf 100 Gew.-% eingesetzter aromatischer Dihydroxiverbindungen, an Katalysator eingesetzt wird.

3. Verfahren zur Herstellung von linearen oder verzweigten thermoplastischen, aromatischen Polyphosphonaten gemäss den Ansprüchen 1 und 2, dadurch gekennzeichnet, dass als Umesterungskatalysator $C_1$-$C_{18}$-Tetraalkyltitanate verwendet werden.

4. Verfahren zur Herstellung von linearen oder verzweigten thermoplastischen, aromatischen Polyphosphonaten gemäss Anspruch 3, dadurch gekennzeichnet, dass Titantetrabutylat als Umesterungskatalysator verwendet wird.

5. Verfahren zur Herstellung von linearen oder verzweigten thermoplastischen, aromatischen Polyphosphonaten gemäss den Ansprüchen 1 und 2, dadurch gekennzeichnet, dass Dibutylzinnoxid als Umesterungskatalysator verwendet wird.

6. Verfahren zur Herstellung von linearen oder verzweigten thermoplastischen, aromatischen Polyphosphonaten gemäss den Ansprüchen 1 und 2, dadurch gekennzeichnet, dass Tributylzinnacetat als Umesterungskatalysator verwendet wird.

7. Verfahren zur Herstellung von linearen oder verzweigten thermoplastischen, aromatischen Polymethylphosphonaten gemäss den Ansprüchen 1 bis 5, dadurch gekennzeichnet, dass Methylphosphonsäurediphenylester als Diarylphosphonat eingesetzt wird.

8. Verfahren zur Herstellung von verzweigten thermoplastischen, aromatischen Polyphosphonaten gemäss den Ansprüchen 1 bis 6, dadurch gekennzeichnet, dass die Phosphonsäurediarylester mit aromatischen Dihydroxiverbindungen in Gegenwart von 0,01 bis 3 Mol-%, bezogen auf 100 Mol-% aromatischer Dihydroxiverbindungen, an aromatischen Tri- oder Tetrahydroxiverbindungen, mit der Massgabe, dass die Summe aus verzweigenden Triarylphosphaten und verzweigenden aromatischen Tri- oder Tetrahydroxiverbindungen maximal 3 Mol-% beträgt, umgesetzt werden.

9. Verwendung der gemäss den Ansprüchen 1 bis 7 hergestellten aromatischen Polyphosphonate zur Herstellung von thermoplastischen Formkörpern.

**Claims**

1. Process for the preparation of linear or branched-chain thermoplastic aromatic polyphosphonates having average molecular weights (number average $\overline{M}_n$) of 11,000 to 200,000 by solvent-free ester interchange of at least one diaryl phosphonate and optionally at least one triaryl phosphate with at least one aromatic dihydroxy compound and optionally at least one aromatic tri- and/or tetrahydroxy compound in an oxygen-free gas atmosphere at atmospheric pressure or reduced pressure, with

removal of the volatile constituents by distillation, and in the presence of catalytic quantities of an ester interchange catalyst, characterised in that the ester interchange catalyst used is at least one from the group of

$C_1$-$C_{18}$ tetraalkyl titanates,
$C_3$-$C_{18}$ tetraalkyl zirconates,
$C_2$-$C_{18}$ trialkyl vanadylates,
$C_2$-$C_4$ dialkyl tin oxides,
$C_2$-$C_4$-dialkyl-$C_1$-$C_4$-dialkoxy tin compounds,

one from the group of antimony or bismuth salts, one from the group of $C_2$-$C_4$ dialkyl stannic acid esters, one from the group of $C_2$-$C_4$ trialkyl stannic acid esters, or at least one of the catalysts from the aforementioned groups in admixture with germanium dioxide or titanium dioxide.

2. Process for the preparation of linear or branched-chain thermoplastic aromatic polyphosphonates according to Claim 1, characterised in that the catalyst is used in a quantity of $10^{-4}$ to $2 \times 10^{-2}$% by weight, based on 100% by weight of the aromatic dihydroxy compounds used.

3. Process for preparation of linear or branched-chain thermoplastic aromatic polyphosphonates according to Claims 1 and 2, characterised in that $C_1$-$C_{18}$ tetraalkyl titanates are used as the ester interchange catalyst.

4. Process for the preparation of linear or branched-chain thermoplastic aromatic polyphosphonates according to Claim 3, characterised in that titanium tetrabutylate is used as the ester interchange catalyst.

5. Process for the preparation of linear or chanched-chain thermoplastic aromatic polyphosphonates according to Claims 1 and 2, characterised in that dibutyl tin oxide is used as the ester interchange catalyst.

6. Process for the preparation of linear or branched-chain thermoplastic aromatic polyphosphonate according to Claims 1 and 2, characterised in that tributyl tin acetats is used as the ester interchange catalyst.

7. Process for the preparation of linear or branched-chain thermoplastic aromatic polymethyl phosphonates according to Claims 1 to 5, characterised in that methyl phosphonic acid diphenyl ester is used as the diaryl phosphonate.

8. Process for the preparation of branched-chain thermoplastic aromatic polyphosphonates according to Claims 1 to 6, characterised in that the phosphonic acid diaryl esters are reacted with aromatic hydroxy compounds in the presence of 0.01 to 3 mol %, based on 100 mol % of aromatic dihydroxy compounds, of aromatic trihydroxy or tetrahydroxy compounds, provided that the sum of branching triaryl phosphates and branching aromatic trihydroxy or tetrahydroxy compounds is not more than 3 mol %.

9. Use of the aromatic polyphosphonates prepared according to Claims 1 to 7 for the production of thermoplastic mouldings.

**Revendications**

1. Procédé de préparation de polyphosphonates aromatiques thermoplastiques, linéaires ou ramifiés, ayant des poids moléculaires moyens (moyenne en nombre $\overline{M}_n$) de 11 000 à 200 000, par transestérification d'au moins un phosphonate de diaryle et éventuellement aumoins un phosphate de triaryle avec au moins un composé dihydroxylé aromatique et éventuellement au moins un phosphate de triaryle avec au droxylé aromatique en masse fondue, en atmosphère de gaz sans oxygène à la pression atmosphérique ou sous pression réduite, en présence de quantités catalytiques d'un catalyseur de transestérification en chassant par distillation les constituants volatils, procédé caractérisé en ce qu'on utilise comme catalyseur de transestérification au moins un composé choisi dans l'ensemble formé par les

titanates de tétraalkyle en $C_1$-$C_{18}$,
zirconates de tétraalkyle en $C_3$-$C_{18}$,
vanadylates de trialkyle en $C_2$-$C_{18}$,
oxydes de dialkylétain en $C_2$-$C_4$,
composés de dialkyl-($C_2$-$C_4$)-dialcoxy($C_1$-$C_4$)étain,

un composé choisi dans l'ensemble formé par les sels d'antimoine ou de bismuth, un composé choisi dans l'ensemble formé par les esters de dialkylétain ($C_2$-$C_4$) d'un acide, un composé choisi dans l'ensemble formé par les esters de trialkylétain ($C_2$-$C_4$) d'un acide, ou au moins l'un des catalyseurs des groupes ou ensembles précités en mélange avec du dioxyde de germanium ou du dioxyde de titane.

2. Procédé pour préparer des polyphosphonates aromatiques thermoplastiques, linéaires ou ramifiés, selon la revendication 1, procédé caractérisé en ce qu'on utilise $10^{-4}$ à $2.10^{-2}$% en poids, par rapport à 100% en poids des composés dihydroxylés aromatiques utilisés, d'un catalyseur.

3. Procédé de préparation de polyphosphonates aromatiques thermoplastiques linéaires ou ramifiés, selon les revendications 1 et 2, caractérisé en ce qu'on utilise comme catalyseur de transestérification des titanates de tétraalkyle en $C_1$-$C_{18}$.

4. Procédé de préparation de polyphosphonates aromatiques thermoplastiques, linéaires ou ramifiés, selon la revendication 3, caractérisé en ce qu'on utilise du tétrabutylate de titane comme catalyseur de transestérification.

5. Procédé de préparation de polyphosphonates aromatiques thermoplastiques, linéaires ou ramifiés, selon les revendications 1 et 2, caractérisé en ce qu'on utilise de l'oxyde de dibutylétain comme catalyseur de transestérification.

6. Procédé de préparation de polyphosphonates aromatiques thermoplastiques, linéaires ou ramifiés, selon les revendications 1 et 2, caractérisé en ce qu'on utilise de l'acétate de tributylétain comme catalyseur de transestérification.

7. Procédé de préparation de polyméthylphosphonates aromatiques thermoplastiques, linéaires ou ramifiés, selon les revendications 1 à 5, caractérisé en ce qu'on utilise du méthylphosphonate de diphényle comme phosphonate de diaryle.

8. Procédé de préparation de polyphosphonates aromatiques thermoplastiques ramifiés selon les revendications 1 à 6, caractérisé en ce qu'on fait réagir les phosphonates de diaryle avec des composés dihydroxylés aromatiques en présence de 0,01 à 3 moles %, par rapport à 100 moles % de composés dihydroxylés aromatiques, de composés tri- ou tétrahydroxylés aromatiques, étant bien entendu que la somme des phosphates de triaryle à rôle de ramification et des composés aromatiques tri- ou tétrahydroxylés à rôle de ramification représente au maximum 3 moles %.

9. Utilisation des polyphosphonates aromatiques, préparés selon les revendications 1 à 7, à la production de pièces moulées thermoplastiques.